# FASCICULE DE BREVET EUROPEEN

(11) **EP 1 936 771 B1**
(45) Date de publication et mention de la délivrance du brevet: **27.07.2016**
(21) Numéro de dépôt: 07354058.5
(22) Date de dépôt: 10.10.2007
(51) Int. Cl.: H02H 3/33, H02H 3/00

(54) **Dispositif de protection différentielle**
Differentialschutzvorrichtung
Differential protection device

(30) Priorité: 18.12.2006 FR 0611010
(43) Date de publication de la demande: 25.06.2008
(73) Titulaire: Schneider Electric Industries SAS, 92500 Rueil-Malmaison (FR)
(72) Inventeur: Chelloug , Mustapha, 38050 Grenoble Cedex 09 (FR)
(74) Mandataire: Colette, Marie-Françoise

(56) Documents cités:
- EP-A- 0 936 716
- US-A- 4 833 564

## Description

### DOMAINE TECHNIQUE DE L'INVENTION

L'invention concerne un dispositif de protection différentielle comportant :
- des moyens de mesure de courant différentiel,
- des moyens de traitement connectés aux moyens de mesure pour recevoir un signal représentatif d'un courant différentiel, lesdits moyens de traitement comprenant des moyens de sélection de calibre de fonctionnement et des moyens de sélection de la temporisation, pour sélectionner des courbes de déclenchement,
- des moyens actionneurs pour ouvrir des contacts principaux du disjoncteur en fonction de la sélection des courbes de déclenchement, et
- des moyens de test connectés aux moyens de mesure.

### ETAT DE LA TECHNIQUE

La demande de brevet EP 0 936 716 décrit un dispositif de protection différentielle comportant des moyens de mesure de courant différentiel, des moyens de traitement connectés aux moyens de mesure pour recevoir un signal représentatif d'un courant différentiel, des moyens de sélection pour sélectionner un calibre de fonctionnement des moyens de traitement, des moyens de test connectés aux moyens de mesure et associés aux moyens de sélection de calibre pour sélectionner un calibre bas lorsque lesdits moyens de test sont actionnés, et des moyens actionneurs. Un autre exemple de protection differentielle avec circuit de test et regulation du calibre est divulgué par US 4 833 564.

Les moyens de test des dispositifs de protection différentielle de l'art antérieur sont mis en oeuvre en générant un courant de test présentant une intensité suffisante pour être détectée par les moyens de mesure de courant différentiel. Un inconvénient des moyens de test mis en oeuvre dans les dispositifs de protection différentielle de l'art antérieur est une consommation énergétique non optimisée.

### EXPOSE DE L'INVENTION

L'invention vise à remédier aux inconvénients des dispositifs de l'art antérieur en proposant un dispositif de protection différentielle comportant :
- des moyens de mesure de courant différentiel,
- des moyens de traitement connectés aux moyens de mesure pour recevoir un signal représentatif d'un courant différentiel, lesdits moyens de traitement comprenant des moyens de sélection de calibre de fonctionnement et des moyens de sélection de la temporisation, pour sélectionner des courbes de déclenchement, et
- des moyens actionneurs pour ouvrir des contacts principaux du disjoncteur en fonction de la sélection des courbes de déclenchement, et
- des moyens de test connectés aux moyens de mesure.

Dans le dispositif de protection différentielle selon l'invention, les moyens de test sont associés aux moyens de sélection de calibre de fonctionnement et aux moyens de sélection de la temporisation, pour sélectionner un calibre de fonctionnement minimum ou réduit et pour sélectionner une temporisation minimum ou réduite, lorsque lesdits moyens de test sont actionnés.

De préférence, les moyens de test sont associés à un circuit d'entrée des moyens de traitement pour augmenter le gain de moyens amplificateurs, lorsque les moyens de test sont actionnés.

De préférence, les moyens de test comportent un interrupteur de commande, ledit interrupteur permettant de générer un courant de test pendant une durée supérieure à la temporisation minimale. Avantageusement, le courant de test est généré avec un délai initial supérieur à 50 millisecondes. Avantageusement, le courant de test comporte au moins une impulsion, de préférence, au moins un train d'impulsions. Dans ce cas, le au moins un train d'impulsions a, de préférence, une durée supérieure à la temporisation minimale, par exemple inférieure à dix fois la temporisation minimale. De préférence, le courant de test comporte une pluralité de trains d'impulsions séparés par une durée d'au moins deux fois la temporisation minimum ou réduite.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente schématiquement un dispositif de protection différentielle et les moyens de test associés selon un mode de réalisation de l'invention.

La figure 2 est un schéma fonctionnel du circuit de contrôle du dispositif de protection différentielle selon un mode de réalisation de l'invention.

Les figures 3a et 3b représentent, à titre d'exemple, le signal de commande du test et le signal de test du dispositif de protection différentielle.

### DESCRIPTION DETAILLEE D'UN MODE DE REALISATION

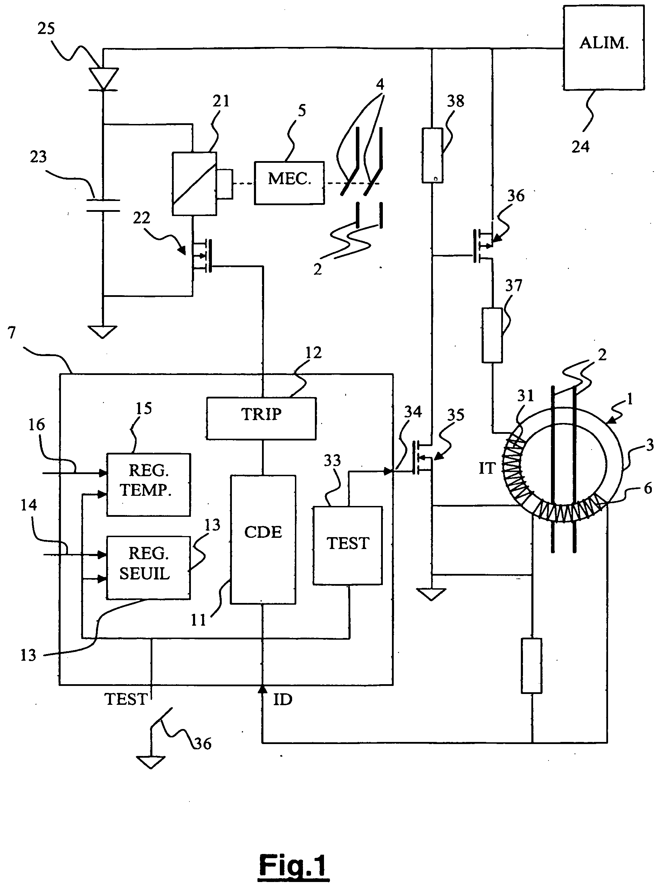

Le disjoncteur représenté à la figure 1 est un dispositif de protection différentielle comportant un tore de mesure 1 pour mesurer un courant différentiel dans des conducteurs de ligne 2 d'une installation à protéger. Un circuit magnétique 3 du tore entoure les conducteurs de ligne qui forment ainsi un enroulement primaire. Les conducteurs de ligne sont connectés en série avec des contacts principaux 4 pouvant être ouvert par un mécanisme 5. Ces contacts peuvent être les contacts d'un relais, d'un interrupteur ou d'un disjoncteur.

Dans le dispositif de protection différentielle de la figure 1, le tore de mesure 1 comporte un premier enroulement secondaire 6 connecté à un circuit de traitement 7 pour recevoir un signal ID représentatif d'un courant différentiel. Une résistance de charge 8 est connectée aux extrémités du premier enroulement secondaire pour déterminer la sensibilité maximale du circuit de traitement.

Le circuit de traitement 7 comporte également un circuit de traitement du courant 11 pour fournir une commande de déclenchement à un circuit de déclenchement 12 permettant d'actionner le mécanisme 5 pour ouvrir les contacts principaux 4. Le circuit de traitement du courant 11 est connecté au premier enroulement secondaire 6 du tore 1 pour recevoir le signal ID représentatif d'un courant différentiel circulant dans les conducteurs 2. Un premier dispositif de réglage 13 connecté au circuit de traitement du courant 11 permet le réglage ou la sélection du calibre de fonctionnement ou d'un seuil de fonctionnement prédéterminé. Le réglage ou la sélection est réalisé via une entrée 14. Si le courant différentiel dans les conducteurs 2 dépasse ce seuil de fonctionnement, le dispositif de protection agit par exemple sur les contacts principaux 4. Un deuxième dispositif de réglage 15 connecté également au circuit de traitement du courant 11 permet le réglage ou la sélection de la temporisation. Le réglage ou la sélection est réalisé via une entrée 16. La commande de déclenchement est ainsi appliquée au circuit de déclenchement 12 avec la temporisation sélectionnée. La sélection du calibre de fonctionnement et la sélection de la temporisation permettent de sélectionner la courbe de déclenchement.

Le circuit de déclenchement 12 est connecté à un actionneur 21, par l'intermédiaire d'un transistor de commande 22. L'actionneur permet d'ouvrir les contacts principaux 4 du disjoncteur, en réponse à un défaut électrique du type différentiel et en fonction de la sélection des courbes de déclenchement. L'actionneur 21 et le transistor de commande 22 sont montés en parallèle avec une capacité de stockage 23 d'énergie électrique permettant de maintenir l'alimentation électrique de l'actionneur. Cette capacité est alimentée par une alimentation 24, par l'intermédiaire d'une diode 25.

Le dispositif de protection différentielle de l'invention comporte, en outre, des moyens de test permettant d'envoyer un courant de test IT dans un second enroulement secondaire 31. Les moyens de test comportent un interrupteur, en l'occurrence un bouton poussoir 32 connecté à un circuit de test 33 dans le circuit de traitement 7. Le circuit test permet, en réponse à la fermeture du bouton poussoir 32 de générer un signal de test sur une sortie 34 du circuit de traitement 7. Cette sortie 34 est elle-même connectée au second enroulement secondaire 31 du tore de mesure, par l'intermédiaire de moyens amplificateurs alimentés électriquement par l'alimentation 24. Ces moyens amplificateurs comportent deux transistors 35 et 36 et deux résistances 37 et 38. Dans le cas de la figure 1, les transistors 35 et 36 ont une fonction d'interrupteur. Les impulsions délivrées par la sortie 34 permet de commander la fermeture de ces interrupteurs pour générer un courant de test IT dans le second enroulement secondaire 31. La résistance 37 sert à limiter le courant dans le second enroulement secondaire 31 et la résistance 38 sert à polariser l'interrupteur 36. Ainsi lors d'un test, une action sur l'interrupteur 32 permet le passage d'un courant de test IT dans le second enroulement secondaire 31.

Comme cela est représenté à la figure 1, l'interrupteur 32 des moyens de test est également connecté aux moyens 13 de sélection du calibre de fonctionnement et aux moyens 15 de sélection de la temporisation. Cette association des moyens de test aux moyens 13 de sélection de calibre de fonctionnement et aux moyens 15 de sélection de la temporisation permet, lorsque lesdits moyens de test sont actionnés, de sélectionner un calibre de fonctionnement minimum ou réduit, ainsi qu'une temporisation minimum ou réduite. Ainsi les moyens de test du dispositif agissent sur les dispositifs de réglage 13 et 15 pour sélectionner, à la fois, un calibre minimum ou réduit et une temporisation minimum ou réduite. De ce fait, lors d'un test, un courant de test IT de faible intensité est suffisant pour tester le fonctionnement du dispositif de protection différentielle, et la consommation électrique s'en trouve optimisée. Pour limiter encore plus la valeur du courant de test, le nombre de spires du second enroulement secondaire 31 peut éventuellement être augmenté. Le rapport entre le nombre de spires du second enroulement secondaire et du premier enroulement secondaire est limité par l'espace autour du tore. Ce rapport peut être compris entre 1 et 50, par exemple égal à 10.

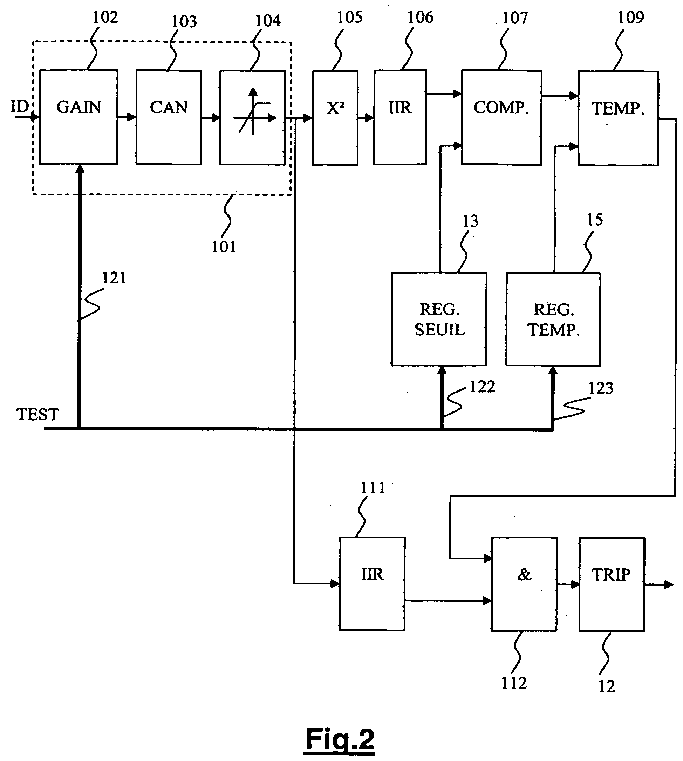

Comme cela est représenté à la figure 2, le circuit de traitement du courant 11 comporte une succession de modules permettant de fournir une commande de déclenchement au circuit de déclenchement 12 en fonction du signal ID représentatif d'un courant différentiel. Dans le mode de réalisation représenté à la figure 2, le circuit de traitement du courant comporte un circuit d'entrée 101 permettant de recevoir et de traiter le signal ID représentatif du courant différentiel. Le circuit d'entrée est équipé d'un amplificateur 102, d'un convertisseur analogique numérique 103 et d'un filtre passe haut 104 pour sélectionner la partie continue du signal. Un module multiplicateur 105, en l'occurrence permettant d'élever au carré, et un filtre passe bas 106 permettent de déterminer la valeur efficace du courant différentiel. Un module comparateur 107 permet de comparer la valeur efficace du courant différentiel avec un calibre de fonctionnement sélectionné à l'aide des moyens 13 de sélection de calibre. Lorsque la valeur efficace du courant différentiel est supérieure au calibre de fonctionnement, un premier signal d'activation est envoyé à un module de temporisation 109. Le module de temporisation permet de transmettre le premier signal d'activation après l'écoulement d'une durée de temporisation sélectionnée par des moyens 15 de sélection de la temporisation. Parallèlement aux modules 105, 106, 107 et 109, le signal issu du filtre passe-haut 104 est transmis, après filtrage dans un filtre rapide 111, comme second signal d'activation Le filtre 111 permet de réaliser une validation rapide de la présence d'un défaut différentiel. Le traitement par les modules 105, 106, 107 et 109 est moins rapide que celui réalisé par le filtre 111. Les deux signaux d'activation sont envoyés dans un module booléen 112 permettant de réaliser un « ET » logique. Lorsque les signaux d'activation sont envoyés en même temps, une commande de déclenchement est envoyée au circuit de déclenchement 12. Ainsi, pour qu'une commande de déclenchement soit envoyée, il est nécessaire que la présence d'un défaut différentiel soit validée par le filtre rapide 111 au moins jusqu'au bout de la durée de temporisation.

Comme cela est représenté à la figure 2, l'interrupteur de test est relié fonctionnellement à l'amplificateur 102 du circuit d'entrée 101, par une liaison fonctionnelle 121. L'actionnement de l'interrupteur de test permet d'augmenter le gain de l'amplificateur 102 à une valeur élevée ou maximum. L'interrupteur de test est également relié fonctionnellement aux moyens de sélection du calibre de fonctionnement 13 par une liaison fonctionnelle 122. Ainsi, l'actionnement de l'interrupteur de test permet de sélectionner un calibre de fonctionnement minimum ou réduit. De la même façon, l'interrupteur de test est relié fonctionnellement aux moyens de sélection de la temporisation 15 par une liaison fonctionnelle 123. Ainsi, l'actionnement de l'interrupteur de test permet de sélectionner une temporisation minimum ou réduite. Ces relations fonctionnelles entre, d'un côté, les moyens de test et, de l'autre côté, les moyens de sélection du calibre de fonctionnement, les moyens de sélection de la temporisation et les moyens amplificateurs du circuit d'entrée concourent à l'optimisation de la consommation d'énergie électrique du dispositif de protection différentielle.

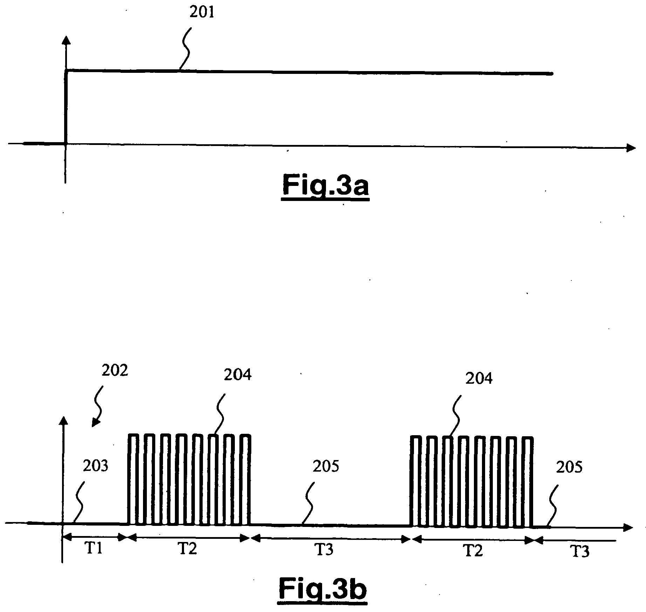

Un exemple de fonctionnement des moyens de test du dispositif de protection de l'invention est illustré aux figures 3a et 3b. Un signal de commande de test 201 est généré par actionnement du bouton poussoir 32. Comme cela est représenté à la figure 3a, le signal de commande passe d'un état bas à un état haut, lors de l'actionnement du bouton poussoir de test. Le circuit de test 33 représenté à la figure 1, permet de générer, en réponse à la commande de test, un signal de test 202. Ce signal de test, après amplification, permet d'envoyer le courant de test IT dans le second enroulement secondaire 31. Comme cela est représenté à la figure 3b, le signal de test 202 comporte une phase initiale 203 d'une durée T1 pendant laquelle ce signal est maintenu à un état bas correspondant à l'absence de courant de test. Ce délai T1 est avantageusement supérieur à 50 millisecondes, par exemple égal à 150 millisecondes. Le délai initial correspondant à cette phase initiale permet d'éviter l'envoi d'un courant de test lorsque le bouton poussoir de test est actionné par erreur ou de manière intempestive. Le signal de test comporte des trains d'impulsions 204 permettant de générer des impulsions de courant. Ces impulsions sont générées par un oscillateur compris dans le circuit de test 33. La durée T2 de ces trains d'impulsions est supérieure à la temporisation minimum ou réduite. Par exemple, la durée T2 du train d'impulsions peut être égale à deux fois la temporisation minimum ou réduite. La limitation de la durée T2 permet d'optimiser la consommation électrique du dispositif. Comme cela est représenté à la figure 3b, le signal de test 202 comporte une pluralité de trains d'impulsions 204 séparés par des phases d'inactivité de durée T3 permettant la recharge de la capacité 23 de stockage d'énergie électrique. La durée T3 peut être supérieure à deux fois la temporisation minimum ou réduite, par exemple égale à 500 millisecondes. La limitation de la durée T2 des trains d'impulsions et l'augmentation de la durée T3 concourent à l'optimisation de la consommation énergique du dispositif de protection différentielle selon l'invention.

Le dispositif de protection différentielle selon l'invention peut être adapté à tout dispositif de protection dans lequel une mesure d'un courant différentiel est réalisée.

## Revendications

1. Dispositif de protection différentielle comportant :
- des moyens de mesure (1) de courant différentiel,
- des moyens de traitement (7) connectés aux moyens de mesure pour recevoir un signal (ID) représentatif d'un courant différentiel, lesdits moyens de traitement comprenant des moyens de sélection de calibre de fonctionnement (14 ; 108) et des moyens de sélection de la temporisation (16 ; 110), pour sélectionner des courbes de déclenchement, et
- des moyens actionneurs (21) pour ouvrir des contacts principaux (4) du disjoncteur en fonction de la sélection des courbes de déclenchement, et
- des moyens de test (31 à 38) connectés aux moyens de mesure,
**caractérisé en ce que** les moyens de test sont associés aux moyens de sélection de calibre de fonctionnement et aux moyens de sélection de la temporisation, pour sélectionner un calibre de fonctionnement minimum ou réduit et pour sélectionner une temporisation minimum ou réduite, lorsque lesdits moyens de test sont actionnés.

2. Dispositif selon la revendication 1, **caractérisé en ce que** les moyens de test sont associés à un circuit d'entrée (101) des moyens de traitement (7) pour augmenter le gain de moyens amplificateurs (102), lorsque les moyens de test sont actionnés.

3. Dispositif selon l'une des revendications 1 ou 2, **caractérisé en ce que** les moyens de test comportent un interrupteur de commande (32), ledit interrupteur permettant de générer un courant de test (IT) pendant une durée supérieure à la temporisation minimale.

4. Dispositif selon la revendication 3, **caractérisé en ce que** le courant de test est généré avec un délai initial supérieur à 50 millisecondes.

5. Dispositif selon l'une des revendications 3 ou 4, **caractérisé en ce que** le courant de test comporte au moins une impulsion.

6. Dispositif selon la revendication 5, **caractérisé en ce que** le courant de test comporte au moins un train d'impulsions (204).

7. Dispositif selon la revendication 6, **caractérisé en ce que** le au moins un train d'impulsions a une durée supérieure à la temporisation minimale.

8. Dispositif selon la revendication 7, **caractérisé en ce que** le au moins un train d'impulsions a une durée inférieure à dix fois la temporisation minimale.

9. Dispositif selon l'une des revendications 3 à 8, **caractérisé en ce que** le courant de test comporte une pluralité de trains d'impulsions séparés par une durée d'au moins deux fois la temporisation minimum ou réduite.

## Patentansprüche

1. Fehlerstrom-Schutzvorrichtung, die aufweist:
- Fehlerstrom-Messeinrichtungen (1),
- Verarbeitungseinrichtungen (7), die mit den Messeinrichtungen verbunden sind, um ein für einen Fehlerstrom repräsentatives Signal (ID) zu empfangen, wobei die Verarbeitungseinrichtungen Betriebsnennbereich-Auswahleinrichtungen (14; 108) und Auswahleinrichtungen der Verzögerung (16; 110) enthalten, um Auslösekurven auszuwählen, und
- Betätigungseinrichtungen (21), um Hauptkontakte (4) des Schutzschalters abhängig von der Auswahl der Auslösekurven zu öffnen, und
- Testeinrichtungen (31 bis 38), die mit den Messeinrichtungen verbunden sind,
**dadurch gekennzeichnet, dass** die Testeinrichtungen den Betriebsnennbereich- Auswahleinrichtungen und den Auswahleinrichtungen der Verzögerung zugeordnet sind, um einen minimalen oder reduzierten Betriebsnennbereich auszuwählen und um eine minimale oder reduzierte Verzögerung auszuwählen, wenn die Testeinrichtungen betätigt werden.

2. Vorrichtung nach Anspruch 1, **dadurch gekennzeichnet, dass** die Testeinrichtungen einem Eingangskreis (101) der Verarbeitungseinrichtungen (7) zugeordnet sind, um die Verstärkung von Verstärkungseinrichtungen (102) zu erhöhen, wenn die Testeinrichtungen betätigt werden.

3. Vorrichtung nach einem der Ansprüche 1 oder 2, **dadurch gekennzeichnet, dass** die Testeinrichtungen einen Steuerschalter (32) aufweisen, wobei der Schalter es ermöglicht, während einer längeren Dauer als die minimale Verzögerung einen Teststrom (IT) zu erzeugen.

4. Vorrichtung nach Anspruch 3, **dadurch gekennzeichnet, dass** der Teststrom mit einer Anfangsverzögerung von mehr als 50 Millisekunden erzeugt wird.

5. Vorrichtung nach einem der Ansprüche 3 oder 4, **dadurch gekennzeichnet, dass** der Teststrom mindestens einen Impuls aufweist.

6. Vorrichtung nach Anspruch 5, **dadurch gekennzeichnet, dass** der Teststrom mindestens eine Impulsfolge (204) aufweist.

7. Vorrichtung nach Anspruch 6, **dadurch gekennzeichnet, dass** die mindestens eine Impulsfolge eine größere Dauer als die minimale Verzögerung hat.

8. Vorrichtung nach Anspruch 7, **dadurch gekennzeichnet, dass** die mindestens eine Impulsfolge eine Dauer hat, die geringer als das Zehnfache der minimalen Verzögerung ist.

9. Vorrichtung nach einem der Ansprüche 3 bis 8, **dadurch gekennzeichnet, dass** der Teststrom eine Vielzahl von Impulsfolgen aufweist, die durch eine Dauer von mindestens dem Zweifachen der minimalen oder reduzierten Verzögerung getrennt sind.

## Claims

1. Differential protection device comprising:
- differential current measurement means (1),
- processing means (7) connected to the measurement means to receive a signal (ID) representative of a differential current, said processing means comprising operating rating selection means (14; 108) and time delay selection means (16; 110) for selecting trip curves, and
- actuator means (21) for opening main contacts (4) of the circuit breaker as a function of the selection of the trip curves, and
- test means (31 to 38) connected to the measurement means, **characterized in that** the test means are associated with the operating rating selection means and with the time delay selection means, for selecting a minimum or reduced operating rating and for selecting a minimum or reduced time delay, when said test means are actuated.

2. Device according to Claim 1, **characterized in that** the test means are associated with an input circuit (101) of the processing means (7) for increasing the gain of amplifier means (102), when the test means are actuated.

3. Device according to one of Claims 1 and 2, **characterized in that** the test means comprise a control switch (32), said switch making it possible to generate a test current (IT) for a duration greater than the minimum time delay.

4. Device according to Claim 3, **characterized in that** the test current is generated with an initial delay greater than 50 milliseconds.

5. Device according to one of Claims 3 and 4, **characterized in that** the test current comprises at least one pulse.

6. Device according to Claim 5, **characterized in that** the test current comprises at least one pulse train (204).

7. Device according to Claim 6, **characterized in that** the at least one pulse train has a duration greater than the minimum time delay.

8. Device according to Claim 7, **characterized in that** the at least one pulse train has a duration of less than ten times the minimum time delay.

9. Device according to one of Claims 3 to 8, **characterized in that** the test current comprises a plurality of pulse trains separated by a duration of at least two times the minimum or reduced time delay.
